# EUROPEAN PATENT SPECIFICATION

(11) **EP 3 173 136 B1**
(45) Date of publication and mention of the grant of the patent: **07.08.2019**
(21) Application number: 15785686.5
(22) Date of filing: 16.03.2015
(51) Int. Cl.: B01D 24/46, C02F 9/08, A01K 63/04

(54) **FILTER WITH FILTER COTTON CLEANING DEVICE IN AQUARIUM OR GARDEN POND**
FILTER MIT FILTERWATTEREINIGUNGSVORRICHTUNG IN EINEM AQUARIUM ODER GARTENTEICH
FILTRE AVEC DISPOSITIF DE NETTOYAGE DE COTON FILTRE DANS UN AQUARIUM OU UNE MARE DE JARDIN

(30) Priority: 29.04.2014 CN 201420213870 U; 28.05.2014 CN 201420276101 U
(43) Date of publication of application: 31.05.2017
(73) Proprietor: Yu, Bingyan, Raoping, Guangdong 515700 (CN)
(72) Inventor: QIU, Yuanrui, Raoping Guangdong 515700 (CN)
(74) Representative: Nony
(86) International application number: PCT/CN2015/000173
(87) International publication number: WO 2015/165277

(56) References cited:
- WO-A1-03/022041
- WO-A1-03/088741
- CN-A- 1 767 764
- CN-U- 201 668 982
- CN-U- 203 816 288
- CN-U- 203 842 361
- CN-Y- 2 375 100
- CN-Y- 201 168 472
- US-A1- 2012 318 755

## Description

### Technical Field

The present invention relates to a filter for an aquarium or a garden pond and relates to cleaning of filter materials in the type of filters, and particularly relates to a filter capable of removing dirt adsorbed in pores by extruding a filter cotton.

### Background

In the prior art, a filter cotton is adopted as a filter material for a filter applied to an aquarium or a garden pond. Dirts are adsorbed in pores of the filter cotton in the process of filtering and treating water by the filter cotton. When accumulated dirts reach a certain degree, the filter cotton must be cleaned. In a filter, a filter cotton is cleaned by a mode of extruding and releasing, so that dirts are released from pores into water in the circumstance that the filter cotton is extruded and released ceaselessly, and are brought out of the filter by water flow, as a result, the filter cotton removes dirts and gains adsorption forces again.

A Chinese utility model patent No. 201020183558.5 discloses a cleaning device for a filter cotton in a filter. An outer side of the filter cotton is provided with an roller. An actuating mechanism actuates the roller to rotate, and the roller extrudes and drives the filter cotton to rotate, thereby cleaning the filter cotton. Problems are as follows. While rotating, the roller is required to not only extrude the filter cotton but also drive the filter cotton and supports to rotate, so that not only machine blocking is likely to occur as a distance sleeve would be in contact with the supports due to deviation thereof but also sliding between the roller and the filter cotton is likely to occur. Particularly, after being used for a period of time, maybe the filter cotton cannot rotate along with the roller, resulting in that the filter cotton cannot be cleaned effectively. In addition, there is a complex structure as multiple layers of supports and distance sleeves are arranged to mount the filter cotton. CN 203842361 U discloses a cleaning device for filter cotton in a filter, wherein the filter has a round barrel shaped case.

### Summary of Invention

The present invention aims to provide a filter with a filter cotton cleaning device in an aquarium or a garden pond, and provides an improvement of a filter cotton rotation mechanism so as to enable the filter cotton to always rotate, so that accumulated dirts in the filter cotton can be cleaned effectively, and the filter has characteristics of reliable rotation and complete cleaning.

The aims of the present invention are realized by following schemes.

A Filter with a filter cotton cleaning device in an aquarium or a garden pond, including a central axial column arranged on a barrel cover of the filter, a filter cotton sleeving the central axial column via a central hole of the filter cotton to enable the filter cotton to rotate around the central axial column, and a blocking bar axially arranged at an outer side of the filter cotton, wherein the filter cotton is extruded between the blocking bar and the central axial column, characterized in that upper and lower connecting plates are respectively arranged above and below the filter cotton, and respectively sleeve the central axial column via central holes of the upper and lower connecting plates, so that the upper and lower connecting plates can rotate around the central axial column; shifting forks are further connected between the upper and lower connecting plates, and pass through eccentric holes of the filter cotton, so that the filter cotton can be actuated by the shifting forks to rotate around the central axial column along with the upper and lower connecting plates; a gear plate is further fixed on the upper connecting plate, and sleeves the central axial column via a central hole of the gear plate so as to enable the gear plate to rotate around the central axial column; the barrel cover is provided with a handle or a motor; a lower end of the handle or a shaft of the motor is provided with an actuating gear which is meshed with the gear plate, so that the handle or the motor drives the gear plate to rotate via the actuating gear.

In this way, the handle or the motor can drive the upper connecting plate fixed with the gear plate to rotate via the actuating gear, and the shifting fork connected with the upper connecting plate actuates the filter cotton to rotate around the central axial column, so that the filter cotton rotates. When the filter cotton rotates, each part of an outer side surface of the filter cotton is extruded continuously by the blocking bar in turn, and the each part is released again when leaving away from the blocking bar, thereby playing roles of extruding and releasing the filter cotton to achieve an aim of cleaning the filter cotton by releasing dirts from pores of the filter cotton into water.

Because a structure, in which the shifting forks drive the filter cotton to rotate, is adopted for the filter obtained in this way, the rotation of the filter cotton is ensured, so that each part of the outer side surface of the filter cotton can be extruded and released continuously by the blocking bar, therefore the each part is cleaned effectively.

For the filter provided by the present invention, the actuating gear drives the gear plate to rotate, and the upper connecting plate actuates the filter cotton to rotate via the shifting forks; moreover, the blocking bar extrudes the filter cotton from the outer side, therefore the extrusion by the blocking bar to the filter cotton would not make any great effect to the rotation mechanism, so that the rotation mechanism would not deviate, thereby preventing machine blocking.

In the schemes above, a sleeve arranged between central holes of the upper and lower connecting plates sleeves the central axial column externally, and is rotatable around the central axial column along with the upper and lower connecting plates. The blocking bar and the sleeve extrude the filter cotton.

Therefore, friction forces subjected to the filter cotton during rotation can be reduced, so that actuating forces are saved when the filter cotton, the upper and lower connecting plates and the like rotate around the central axial column, and acting forces of the handle or the motor during rotation can be relieved.

In the schemes, a lower support plate arranged below the lower connecting plate is connected with lower ends of the central axial column and the blocking bar; an upper end of the blocking bar is connected with the barrel cover; furthermore, steps are formed inside a barrel body; when the barrel cover is installed on the barrel body, an outer edge of the lower support plate can be positioned and supported on the steps of the barrel body, so that the central axial column and the blocking bar can be fixed by the barrel cover and the lower support plate, and the lower support plate can be used for supporting the filter cotton, the upper and lower connecting plates, the shifting forks, the gear plate and the sleeve so as to prevent them from falling off downwardly.

In the schemes, the barrel cover and the lower support plate are provided with rotary shaft seats; upper and lower ends of the blocking bar are provided with rotary shafts; the blocking bar is installed in the rotary shaft seats of the barrel cover and the lower support plate via the rotary shafts at the upper and lower ends of the blocking bar, so that the blocking bar can rotate around the rotary shaft seats. Thus, when the filter cotton rotates, resistance between the filter cotton and the blocking bar can be further reduced.

### Brief Description of Drawings

Fig. 1 is a sectional structure schematic diagram showing a specific embodiment of the present invention;
Fig.2 is a structure schematic diagram showing a filter cotton cleaning mechanism in a filter in Fig.1;
Fig.3 is a structure schematic diagram showing the filter cotton cleaning mechanism installed on the barrel cover in the filter in Fig.1;
Fig 4 is a sectional structure schematic diagram showing another specific embodiment of the present invention;
Fig.5 is a structure schematic diagram showing the filter cotton cleaning mechanism in a filter in Fig.4;
Fig.6 is a structure schematic diagram showing the filter cotton cleaning mechanism installed on the barrel cover in the filter in Fig.4;
Fig.7 is a structure schematic diagram showing the filter cotton in the filter in Fig.1 and Fig.4.

### Detailed Description of the Embodiments

The present invention is described below in detail in conjunction with accompanying drawings;

### Embodiment 1: a specific scheme for actuating manually by a handle.

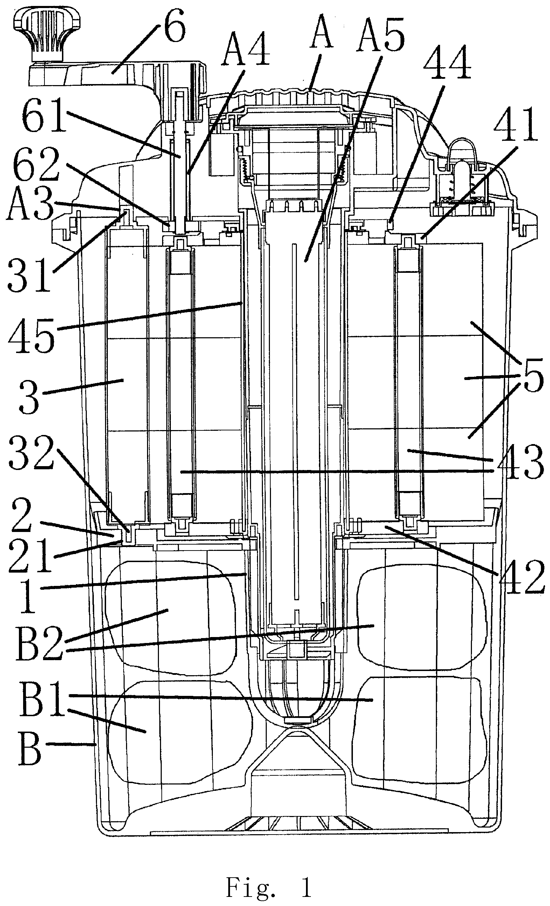

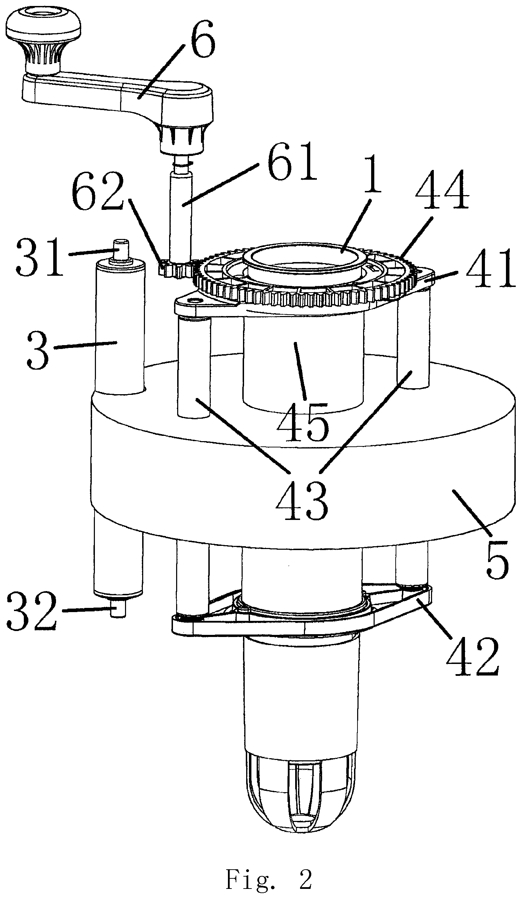

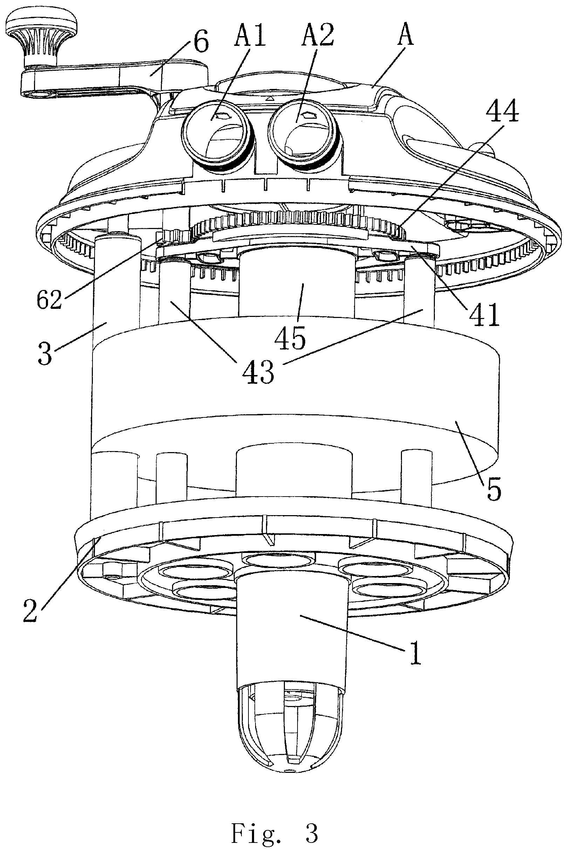

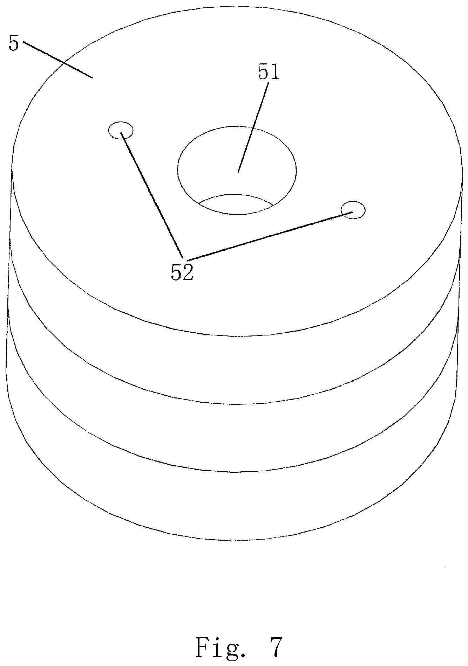

Referring to Fig.1, Fig.2, Fig. 3 and Fig.7, a filter in a aquarium or a garden pond includes a barrel cover A and a barrel body B; a central part of the barrel cover A is provided with a central axial column 1; a lower support plate 2 is connected to the central axial column. When the barrel cover A is installed on the barrel body B, the lower support plate 2 can be positioned and supported on steps inside the barrel body B via an outer edge of the lower support plate 2; the barrel cover A and the lower support plate 2 are further provided with rotary shaft seats A3 and 21, upper and lower ends of blocking bar 3 are provided with rotary shafts 31 and 32, and the blocking bar 3 is installed between the rotary shaft seats A3 and 21 via rotary shafts 31 and 32 at the upper and lower ends, so that the blocking bar 3 can rotate in the rotary shaft seats A3 and 21; upper and lower connecting plates 41 and 42 are arranged between the barrel cover A and the lower support plate 2, and the upper and lower connecting plates 41 and 42 sleeve the central axial column 1 via central holes of the upper and lower connecting plates 41 and 42, so that the upper and lower connecting plates 41 and 42 can rotate around the central axial column 1; two shifting forks 43 are further connected between the upper and lower connecting plates 41 and 42; a sleeve 45 sleeves the central axial column 1 externally; two ends of the sleeve 45 are connected with central holes of the upper and lower connecting plates 41 and 42, so that the sleeve 45 can rotate around the central axial column 1 along with the upper and lower connecting plates 41 and 42; the filter cotton 5 is cylindrical, and a central hole 51 and two eccentric holes 52 is formed in the filter cotton 5 which is installed between the upper and lower connecting plates 41 and 42, and the central hole 51 of the filter cotton 5 sleeves the sleeve 45 and the central axial column 1; moreover, two shifting forks 43 respectively pass through the two eccentric holes 52 of the filter cotton 5, so that the filter cotton 5 can be actuated by the shifting forks 43 so as to rotate around the central axial column 1 along with the upper and lower connecting plates 41 and 42, and to extrude the filter cotton 5 by the blocking bar 3 and the sleeve 45; a gear plate 44 is further fixed on the upper connecting plate 41, and the gear plate 44 sleeves the central axial column 1 via a central hole of the gear plate 44 so as to enable the gear plate 44 to rotate around the central axial column 1. The barrel cover A is provided with a handle 6, a rotary shaft 61 of the handle 6 is installed on a rotary shaft seat A4 of the barrel cover 4, a lower end of the rotary shaft 61 is provided with an actuating gear 62 which is meshed with the gear plate 44, and the handle 6 can drive the gear plate 44 to rotate via the actuating gear 62.

Thus, when the handle 6 rotates, the actuating gear 62 can drive the gear plate 44 to rotate, so that the upper connecting plate 41 rotates; and then the upper connecting plate 41 actuates the filter cotton 5 to rotate around the central axial column 1 via the shifting forks 43; meanwhile, the upper and lower connecting plates 41 and 42 play a role of axially limiting the filter cotton 5, so that the filter cotton 5 cannot move up and down.

A filtering and cleaning process in a specific embodiment is introduced below. When the filter runs normally to filter water, water to be treated flows into multiple layers of filter cotton 2 from top to bottom after being pumped into the filter from a water inlet A1 in the barrel cover by a water pump. At this time, dirts such as solid impurities, colloid and the like in water are blocked and adsorbed by pores of the filter cotton 2, and then water flows downwardly into a lower part of the filter. After being filtered by active carbon B1, a ceramic ring B2 and the like, water flows into an inner hole of the central axial column from bottom to top. An ultraviolet ray sterilization device A5 for further performing sterilization treatment to water may be arranged in the inner hole of the central axial column; an upper end of the inner hole of the central axial column is connected with a water outlet A2 of the barrel cover. Water flows out of the filter via the water outlet A2 of the barrel cover after reaching the upper part of the central axial column, so that water is filtered.

While cleaning, a flowing direction of water is opposite to a direction when water is filtered in a normal operation, i.e., water enters the filter from the water outlet A2, and water flowing out of the water inlet A1 is leaded outside a pond for treatment, meanwhile, the handle can be shaken, so that the filter cotton can be extruded and released continuously, and dirts such as solid impurities, colloid and the like blocked and adsorbed in pores of the filter cotton are released into water. The released dirts such as solid impurities, colloid and the like are taken away by water flows and discharged outside the filter, thereby achieving an aim of cleaning the filter cotton.

### Embodiment 2: a specific scheme for actuating automatically by a motor.

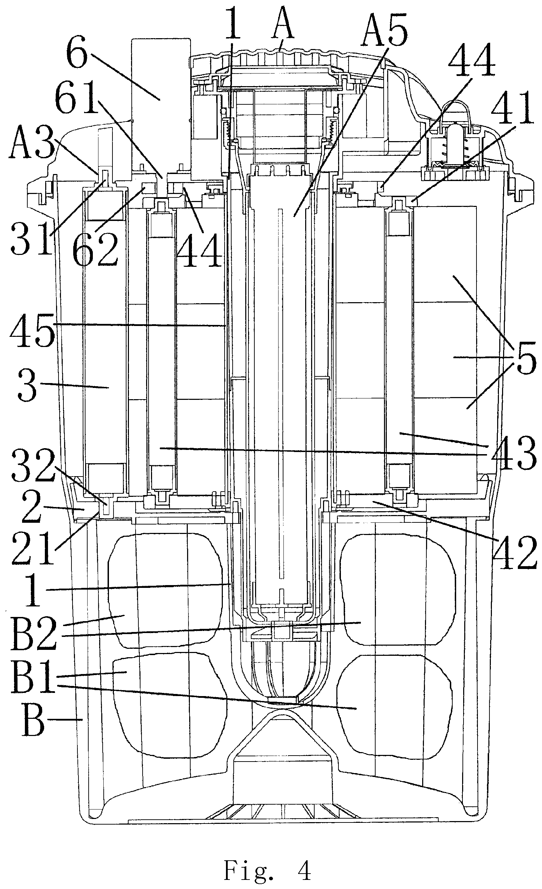

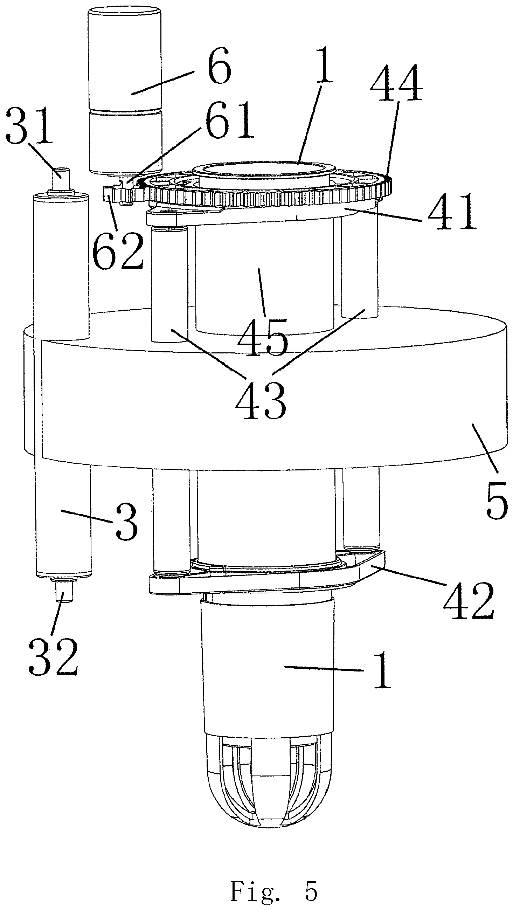

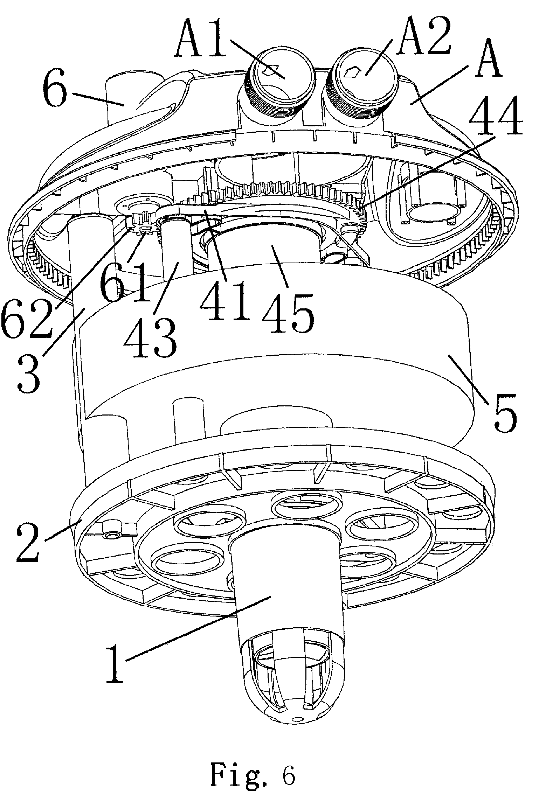

Referring to Fig.4, Fig.5, Fig. 6 and Fig.7, a filter in a aquarium or a garden pond includes a barrel cover A and a barrel body B; a central part of the barrel cover A is provided with a central axial column 1; a lower support plate 2 is connected to the central axial column. When the barrel cover A is installed on the barrel body B, the lower support plate 2 can be positioned and supported on steps inside the barrel body B via an outer edge of the lower support plate 2; the barrel cover A and the lower support plate 2 are further provided with rotary shaft seats A3 and 21, upper and lower ends of blocking bar 3 are provided with rotary shafts 31 and 32, and the blocking bar 3 is installed between the rotary shaft seats A3 and 21 via rotary shafts 31 and 32 at the upper and lower ends, so that the blocking bar 3 can rotate in the rotary shaft seats A3 and 21; upper and lower connecting plates 41 and 42 are arranged between the barrel cover A and the lower support plate 2, and the upper and lower connecting plates 41 and 42 sleeve the central axial column 1 via central holes of the upper and lower connecting plates 41 and 42, so that the upper and lower connecting plates 41 and 42 can rotate around the central axial column 1; two shifting forks 43 are further connected between the upper and lower connecting plates 41 and 42; a sleeve 45 sleeves the central axial column 1 externally; two ends of the sleeve 45 are connected with central holes of the upper and lower connecting plates 41 and 42, so that the sleeve 45 can rotate around the central axial column 1 along with the upper and lower connecting plates 41 and 42; the filter cotton 5 is cylindrical, and a central hole 51 and two eccentric holes 52 is formed in the filter cotton 5 which is installed between the upper and lower connecting plates 41 and 42, and the central hole 51 of the filter cotton 5 sleeves the sleeve 45 and the central axial column 1; moreover, two shifting forks 43 respectively pass through the two eccentric holes 52 of the filter cotton 5, so that the filter cotton 5 can be actuated by the shifting forks 43 so as to rotate around the central axial column 1 along with the upper and lower connecting plates 41 and 42, and to extrude the filter cotton 5 by the blocking bar 3 and the sleeve 45; a gear plate 44 is further fixed on the upper connecting plate 41, and the gear plate 44 sleeves the central axial column 1 via a central hole of the gear plate 44 so as to enable the gear plate 44 to rotate around the central axial column 1. The barrel cover A is provided with a motor 6; a rotary shaft 61 of the motor 6 is provided with an actuating gear 62 which is meshed with the gear plate 44, and the motor 6 can drive the gear plate 44 to rotate via the actuating gear 62.

Thus, when the motor 6 operates to rotate, the actuating gear 62 can drive the gear plate 44 to rotate, so that the upper connecting plate 41 also rotates; and then the upper connecting plate 41 actuates the filter cotton 5 to rotate around the central axial column 1 via the shifting forks 43; meanwhile, the upper and lower connecting plates 41 and 42 play a role of axially limiting the filter cotton 5, so that the filter cotton 5 cannot move up and down.

A filtering and cleaning process in a specific embodiment is introduced below.

When the filter runs normally to filter water, water to be treated flows into multiple layers of filter cotton 2 from top bottom after being pumped into the filter from a water inlet A1 in the barrel cover by a water pump. At this time, dirts such as solid impurities, colloid and the like in water are blocked and adsorbed by pores of the filter cotton 2, and then water flows downwardly into a lower part of the filter. After being filtered by active carbon B1, a ceramic ring B2 and the like, water flows into an inner hole of the central axial column from bottom to top. An ultraviolet ray sterilization device A5 for further performing sterilization treatment to water may be arranged in the inner hole of the central axial column; an upper end of the inner hole of the central axial column is connected with a water outlet A2 of the barrel cover. Water flows out of the filter via the water outlet A2 of the barrel cover after reaching the upper part of the central axial column, so that water is filtered.

While cleaning, a flowing direction of water is opposite to a direction when water is filtered in a normal operation, i.e., water enters the filter from the water outlet A2, and water flowing out of the water inlet A1 is leaded outside a pond for treatment, meanwhile, the motor 6 may run to rotate, so that the filter cotton can be extruded and released continuously, and dirts such as solid impurities, colloid and the like blocked and adsorbed in pores of the filter cotton are released into water. The released dirts such as solid impurities, colloid and the like are taken away by water flows and discharged outside the filter, thereby achieving an aim of cleaning the filter cotton.

## Claims

1. A filter with a filter cotton cleaning device in an aquarium or a garden pond, comprising a central axial column (1) arranged on a barrel cover (A) of the filter, a filter cotton (5) sleeving the central axial column (1) via a central hole (51) of the filter cotton (5) to enable the filter cotton (5) to rotate around the central axial column (1), a blocking bar (3) axially arranged at an outer side of the filter cotton (5), wherein the filter cotton (5) is extruded between the blocking bar (3) and the central axial column (1); **characterized in that** upper and lower connecting plates (41, 42) are respectively arranged above and below the filter cotton (5), and respectively sleeve the central axial column (1) via central holes (51) of the upper and lower connecting plates (41, 42), so that the upper and lower connecting plates (41, 42) are rotatable around the central axial column (1); shifting forks (43) are further connected between the upper and lower connecting plates (41, 42), and pass through eccentric holes (52) of the filter cotton (5), so that the filter cotton (5) is drivable by the shifting forks (43) to rotate around the central axial column (1) along with the upper and lower connecting plates (41, 42); a gear plate (44) is further fixed on the upper connecting plate, and sleeves the central axial column (1) via a central hole (51) of the gear plate (44) so as to enable the gear plate (44) to rotate around the central axial column (1); the barrel cover (A) is provided with a handle (6) or a motor; a lower end of the handle (6) or a shaft of the motor is provided with an actuating gear (62) which is meshed with the gear plate, so that the handle (6) or the motor drives the gear plate (44) to rotate via the actuating gear (62).

2. The filter with the filter cotton cleaning device in an aquarium or a garden pond according to claim 1, wherein a sleeve (45) arranged between central holes (51) of the upper and lower connecting plates (41, 42) sleeves the central axial column (1) externally, and is rotatable around the central axial column (1) along with the upper and lower connecting plates (41, 42); the blocking bar (3) and the sleeve (45) extrude the filter cotton (5).

3. The filter with the filter cotton cleaning device in an aquarium or a garden pond according to claim 1 or 2, wherein a lower support plate (2) arranged below the lower connecting plate is connected with lower ends of the central axial column (1) and the blocking bar (3); an upper end of the blocking bar (3) is connected with the barrel cover (A); and steps are formed inside a barrel body (B), and an outer edge of the lower support plate (2) is positioned and supported on the steps of the barrel body (B).

4. The filter with the filter cotton cleaning device in an aquarium or a garden pond according to claim 3, wherein the barrel cover (A) and the lower support plate (2) are provided with rotary shaft seats (A3, 21); upper and lower ends of the blocking bar (3) are provided with rotary shafts (31, 32); the blocking bar (3) is installed in the rotary shaft seats (A3, 21) of the barrel cover (A) and the lower support plate (2) via the rotary shafts (31, 32) at the upper and lower ends of the blocking bar (3).

## Patentansprüche

1. Filter mit Filterwattereinigungsvorrichtung in einem Aquarium oder einem Gartenteich, umfassend eine axiale Mittelsäule (1), die auf einer Zylinderabdeckung (A) des Filters angeordnet ist, eine Filterwatte (5), die die axiale Mittelsäule (1) über ein mittleres Loch (51) der Filterwatte (5) umgibt, um zu ermöglichen, dass sich die Filterwatte (5) um die axiale Mittelsäule (1) dreht, eine Blockierstange (3), die axial auf einer Außenseite der Filterwatte (5) angeordnet ist, wobei die Filterwatte (5) zwischen die Blockierstange (3) und die axiale Mittelsäule (1) gepresst ist, **dadurch gekennzeichnet, dass** eine obere und eine untere Verbindungsplatte (41, 42) jeweils über und unter der Filterwatte (5) angeordnet sind und die axiale Mittelsäule (1) jeweils über mittlere Löcher (51) der oberen und unteren Verbindungsplatte (41, 42) umgeben, so dass die obere und die untere Verbindungsplatte (41, 42) um die axiale Mittelsäule (1) drehbar sind, dass Schaltgabeln (43) ferner zwischen der oberen und der unteren Verbindungsplatte (41, 42) angeschlossen sind und durch außermittige Löcher (52) der Filterwatte (5) führen, so dass die Filterwatte (5) von den Schaltgabeln (43) so antreibbar ist, dass sie sich zusammen mit der oberen und der unteren Verbindungsplatte (41, 42) um die axiale Mittelsäule (1) dreht, dass eine Getriebescheibe (44) ferner auf der oberen Verbindungsplatte befestigt ist und die axiale Mittelsäule (1) über ein mittleres Loch (51) der Getriebescheibe (44) umgibt, um zu ermöglichen, dass sich die Getriebescheibe (44) um die axiale Mittelsäule (1) dreht, dass die Zylinderabdeckung (A) mit einem Griff (6) oder einem Motor versehen ist, dass ein unteres Ende des Griffs (6) oder eine Welle des Motors mit einem mit der Getriebescheibe in Eingriff stehenden Betätigungszahnrad (62) versehen ist, so dass der Griff (6) oder der Motor die Getriebescheibe (44) über das Betätigungszahnrad (62) so antreibt, dass diese sich dreht.

2. Filter mit Filterwattereinigungsvorrichtung in einem Aquarium oder einem Gartenteich nach Anspruch 1, wobei eine Hülse (45), die zwischen den mittleren Löchern (51) der oberen und der unteren Verbindungsplatte (41, 42) angeordnet ist, die axiale Mittelsäule (1) von außen umgibt und zusammen mit der oberen und der unteren Verbindungsplatte (41, 42) um die axiale Mittelsäule (1) drehbar ist, wobei die Blockierstange (3) und die Hülse (45) die Filterwatte (5) zusammenpressen.

3. Filter mit Filterwattereinigungsvorrichtung in einem Aquarium oder einem Gartenteich nach Anspruch 1 oder 2, wobei eine untere Stützplatte (2), die unter der unteren Verbindungsplatte angeordnet ist, mit unteren Enden der axialen Mittelsäule (1) und der Blockierstange (3) verbunden ist, ein oberes Ende der Blockierstange (3) mit der Zylinderabdeckung (A) verbunden ist und Stufen in einem Zylinderkörper (B) ausgebildet sind und eine Außenkante der unteren Stützplatte (2) auf den Stufen des Zylinderkörpers (B) platziert und abgestützt ist.

4. Filter mit Filterwattereinigungsvorrichtung in einem Aquarium oder einem Gartenteich nach Anspruch 3, wobei die Zylinderabdeckung (A) und die untere Stützplatte (2) mit drehbaren Wellensitzen (A3, 21) versehen sind, das obere und das untere Ende der Blockierstange (3) mit Drehwellen (31, 32) versehen sind und die Blockierstange (3) über die Drehwellen (31, 32) an dem oberen und dem unteren Ende der Blockierstange (3) in den drehbaren Wellensitzen (A3, 21) der Zylinderabdeckung (A) und der unteren Stützplatte (2) eingebaut ist.

## Revendications

1. Filtre avec un dispositif de nettoyage de coton filtre dans un aquarium ou une mare de jardin, comprenant une colonne axiale centrale (1) disposée sur un couvercle de tube (A) du filtre, un coton filtre (5) emmanché sur la colonne axiale centrale (1) par un trou central (51) du coton filtre (5) pour permettre au coton filtre (5) de tourner autour de la colonne axiale centrale (1), une barre de blocage (3) placée axialement sur un côté extérieur du coton filtre (5), le coton filtre (5) étant extrudé entre la barre de blocage (3) et la colonne axiale centrale (1); **caractérisé en ce que** des plaques de connexion supérieure et inférieure (41, 42) sont respectivement agencées au-dessus et au-dessous du coton filtre (5), et sont emmanchées respectivement sur la colonne axiale centrale (1) par les trous centraux (51) des plaques de connexion supérieure et inférieure (41, 42), de sorte que les plaques de connexion supérieure et inférieure (41, 42) puissent tourner autour de la colonne axiale centrale (1); des fourches de changement (43) sont en outre reliées entre les plaques de connexion supérieure et inférieure (41, 42) et passent par des trous excentriques (52) du coton filtre (5), de sorte que le coton filtre (5) peut être entraîné par les fourches de changement (43) pour tourner autour de la colonne axiale centrale (1) avec les plaques de connexion supérieure et inférieure (41, 42); une plaque d'engrenage (44) est en outre fixée sur la plaque de connexion supérieure, et est emmanchée sur la colonne axiale centrale (1) par l'intermédiaire d'un trou central (51) de la plaque d'engrenage (44) afin de permettre à la plaque d'engrenage (44) de tourner autour de la colonne axiale centrale (1); le couvercle de tube (A) est muni d'une poignée (6) ou d'un moteur; une extrémité inférieure de la poignée (6) ou d'un arbre du moteur est munie d'un actionneur (62) qui est en prise avec la plaque d'engrenage, de sorte que la poignée (6) ou le moteur entraîne la plaque d'engrenage (44) à tourner via l'actionneur (62).

2. Filtre avec le dispositif de nettoyage de coton filtre dans un aquarium ou une mare de jardin selon la revendication 1, dans lequel un manchon (45) disposé entre des trous centraux (51) des plaques de connexion supérieure et inférieure (41, 42) est emmanché extérieurement sur la colonne axiale centrale (1) et peut tourner autour de la colonne axiale centrale (1) avec les plaques de connexion supérieure et inférieure (41, 42); la barre de blocage (3) et le manchon (45) extrudent le coton filtre (5).

3. Filtre avec le dispositif de nettoyage de coton filtrant dans un aquarium ou une mare de jardin selon la revendication 1 ou 2, dans lequel une plaque de support inférieure (2) disposée sous la plaque de connexion inférieure est reliée aux extrémités inférieures de la colonne axiale centrale (1) et de la barre de blocage (3); une extrémité supérieure de la barre de blocage (3) est reliée au couvercle de tube (A); et des marches sont formées dans un corps du tube (B), et un bord extérieur de la plaque de support inférieure (2) est positionné et supporté sur les marches du corps du tube (B).

4. Filtre avec dispositif de nettoyage de coton filtre dans un aquarium ou une mare de jardin selon la revendication 3, dans lequel le couvercle de tube (A) et la plaque de support inférieure (2) sont munis de logements d'arbres rotatifs (A3, 21); les extrémités supérieure et inférieure de la barre de blocage (3) sont munies d'arbres rotatifs (31, 32); la barre de blocage (3) est installée dans les logements d'arbres rotatifs (A3, 21) du couvercle de tube (A) et la plaque de support inférieure (2) par les axes rotatifs (31, 32) aux extrémités supérieure et inférieure de la barre de blocage (3).
